# EUROPEAN PATENT SPECIFICATION

(11) **EP 2 567 542 B1**
(45) Date of publication and mention of the grant of the patent: **03.08.2016**
(21) Application number: 11723597.8
(22) Date of filing: 05.05.2011
(51) Int. Cl.: H04N 7/10, H04B 3/48, H04H 20/79, H04H 60/97

(54) **CABLE NETWORK DEVICE**
KABELNETZVORRICHTUNG
DISPOSITIF DE RÉSEAU PAR CÂBLE

(30) Priority: 05.05.2010 GB 201007457
(43) Date of publication of application: 13.03.2013
(73) Proprietor: Technetix Group Limited, Burgess Hill West Sussex RH15 9TZ (GB)
(72) Inventor: ARIESEN, Dirk Jan, 3903 LP Veenendaal (NL)
(74) Representative: Forsyth, Helen Jane
(86) International application number: PCT/GB2011/050876
(87) International publication number: WO 2011/138611

(56) References cited:
- EP-A1- 1 406 384
- EP-A2- 0 821 528
- EP-A2- 0 827 297
- US-A1- 2007 261 094
- US-B1- 6 779 197

## Description

### Field of the invention

This invention relates to a cable network device for use in cable television and data transmission networks.

### Background to the invention

In cable networks supplying a large number of users, the signal from the network provider is split many times to ensure each user is able to connect into the provider's network, with the last divider or tap unit connecting to a small number of users via individual taps. Signal losses vary between different users, in part due to the length of cable connecting them to the tap unit, and these losses need to be compensated for so that each user has a similar quality signal. To do this, different taps within a unit are associated with different attenuation levels but there are often issues with matching attenuations for signals are being sent to the user (downstream) or sent from the user (upstream) and with ensuring that both downstream and upstream signal quality is the same for each user.

### Summary of the invention

In accordance with one aspect of the present invention there is provided a cable network device comprising an input connected to a plurality of outputs, connectable to equipment associated with a plurality of end users, wherein the input is connected to each output by first and second electrical communication paths, such that there are a plurality of first and second electrical communication paths, where downstream signals from the input to each output pass along the first electrical communication path and upstream signals from each output to the input pass along the second electrical communication path, and each second electrical communication path has the same attenuation as the other second electrical communication paths.

For each first electrical communication path or downstream path, typically the attenuation level will vary so that the overall downstream attenuation for each user associated with an output port is kept constant when taking into account the attenuation from within the device and from cables attaching equipment to the outputs. For each second electrical communication path or upstream path, the attenuation along that path within the device will be equal to the attenuation demonstrated by all other second paths and similarly the overall upstream attenuation from the equipment to the input will be equal for each equipment user. Thus with such a device with separated downstream and upstream paths within the device the downstream attenuation for all users is equal and also the upstream attenuation for all users is equal.

Typically the upstream signals are low frequency, generally in the range 5 to 8MHz, and more preferably 5 to 65MHz, with the downstream signals having a higher frequency, typically in the range 80.6MHz up to 862MHz and beyond.

According to the invention, the input is connected to a plurality of tap elements, each tap element in communication with one output. The tap elements allow the attenuation of the signal path to be adjusted. Each tap element communicate with an adjoining tap unit and one output such that the tap elements are arranged as a cascade with each output connected to one tap unit.

The input may be connected to a first filter or first filter means to separate electrical signals into high and low frequency bands, and so separate downstream signals to travel along the first electrical communication path. The filter means may of preference be a diplex filter. Depending on the direction of travel of electrical signals, the filter means will either separate or combine high and low frequency signal components.

Each output is desirably connected to a second filter or second filter means to separate out low frequency upstream signals passing from the output to the input so that they travel along the second electrical communication path. Again the second filter means may of preference be a diplex filter.

The input may be connected by way of a splitter means or splitter to each second filter means. The single splitter means combines the upstream signals from each output into one combined signal received by the input for transference to a network provider. By having such a direct connection, with the upstream signal bypassing the tap elements, and so separated from the downstream signal, the upstream low frequency signal follows a separate electrical path to the low frequency signal and reaches the input without being routed through the tap elements.

Alternatively the input may be connected by way of a plurality of splitter means to each second filter means, each splitter means communicating with an adjoining splitter means and one output. In this arrangement, the plurality of splitter means will split the downstream signal into separate signals for each user.

The invention will now be described, by way of example, with reference to the accompanying drawings, in which:
Figure 1 is a schematic diagram to illustrate downstream signal losses for a number of users within a cable network;
Figure 2 is a schematic diagram to illustrate upstream signal losses;
Figure 3 is a schematic diagram of a first embodiment of a cable network device in accordance with the present invention; and
Figure 4 is a schematic diagram of a second embodiment.

### Description

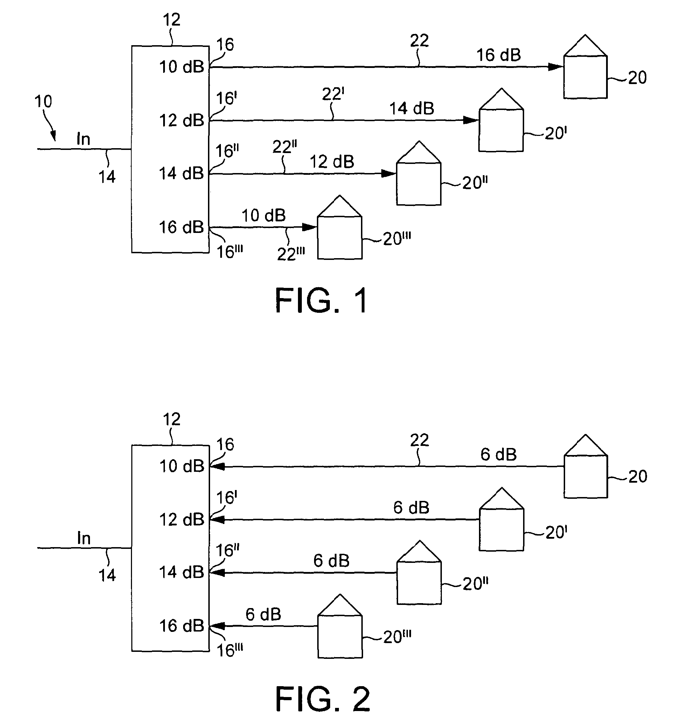

Where a cable television (CATV) or other data and information provider supplies a large number of premises with data, the signal path must be split many times to ensure each user is able to connect into the provider's network. Figure 1 shows a schematic diagram of a last divider or tap in a CATV network 10 and illustrates the path of downstream signals from the network provider 10 to the user 20. Tap unit 12 increases the isolation between the input 14 and output ports 16, 16', 16" and 16'" and allows one to vary levels of attenuation for different ports. From this divider device 12, user homes 20, 20', 20" and 20"', and consequently the appropriate user equipment in those homes, are connected to the external network 10 via coaxial cables 22, 22', 22" and 22"'. The attenuation of each coaxial cable 22 varies depending on the length of the cable. The longer the cable, the greater the attenuation. The insertion loss for each output port and the cable attenuation is shown by way of example.

To offer every home the same level of attenuation and so ensure that signal quality is generally the same for each user, the longest cables will be connected to the taps with the lowest insertion loss. Thus longest cable 22 is connected to port 16 which has the lowest insertion loss of 10dB. The total insertion loss from the input of the tap unit to every home is equalised and in this illustrative example is 26dB.

For upstream signals passing from user 20 to network provider 10, different losses are seen, see Figure 2. The attenuation from cables 22, 22', 22" and 22"' for the lower frequency upstream signals is not as much as for the higher frequency downstream signals. Therefore the attenuation levels arriving at tap ports 16, 16', 16" and 16"'are almost of equal value. As these upstream signals pass through tap unit 12, the attenuation within the tap is added to the attenuation of the signal received from the user 20. This results in different attenuation levels for the upstream signals. Thus the insertion loss from home 20 to the input of the tap for the upstream is 16dB, for home 20' is 18dB, home 20" is 20dB and home 20'" is 22dB. This means a level inequality of 6dB which has a serious impact on the ingress/noise levels on the upstream.

One way to overcome this issue for the upstream signals is to use a splitter with equal attenuation for each port, however this then means the downstream attenuation levels vary which is not correct for the downstream.

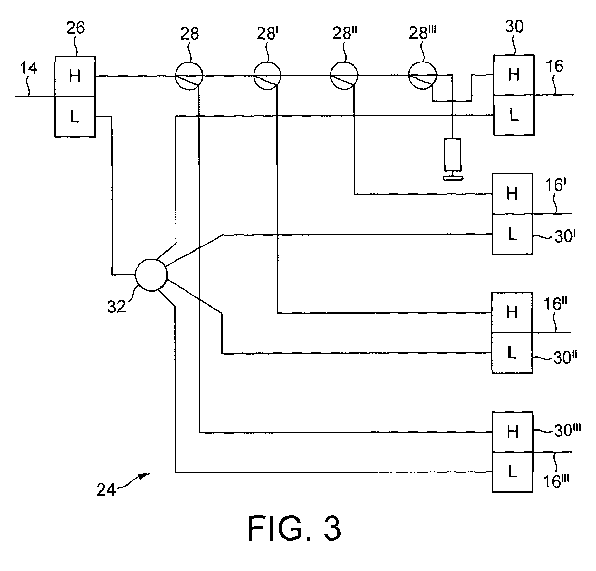

A block diagram of network device 24 in accordance with the present invention is shown in Figure 3. The device behaves as a tap unit in the downstream frequency area and as a splitter with equal attenuation for the upstream signals. The connected homes have equal attenuation levels on the downstream and also equal levels on the upstream. This gives a serious improvement on the noise-floor of the individual connections.

Within the device 24, diplex filter 26 is connected to input 14 and separates the high frequency downstream signals from the low frequency upstream signals. The high frequency signal path is connected to taps 28, 28', 28" and 28"'which are in turn connected to the high pass side of diplex filters 30, 30', 30", and 30'" associated with each output port 16, 16', 16" and 16"'. The low pass side of filter 26 is connected to splitter 32 which in turn is connected to the low pass side of each output diplex filter 30, 30', 30", and 30"'. In this way, paths for the high and low frequency signals are separated.

In use within a cable/data network, the downstream signals are received at input 14 and pass through the high frequency side of filter 26 to reach taps 28, 28', 28" and 28"'and so pass to output diplex filters 30, 30', 30", and 30"'. From these diplex filters, the signal goes to output ports 16, 16', 16" and 16"' and is received by individual users. These downstream signals have different attenuation levels as provided by circuitry associated with the tap ports so as to overcome the different cable lengths associated with each user.

The upstream signal received from each user is received from outputs 16, 16', 16" and 16'" proceeds through the low frequency side of diplex filters 30, 30', 30" and 30"' to splitter 32 which combines the upstream signals from all users. The combined signal is passed to the low frequency side of diplex filter 26 connected to input 14, and sent from input 14 to the network provider 10. By separating the upstream signals from the downstream signals, and routing the upstream signals separately, one can avoid adding unequal losses to the upstream signal and ensure that the losses upstream are substantially equal for all users. By continuing to route the downstream signal through tap elements, the downstream attenuation can be adjusted to compensate for cable length and other factors and ensure that the downstream attenuation for all users is also substantially identical. The device 24 thus provides for optimal downstream and upstream attenuation.

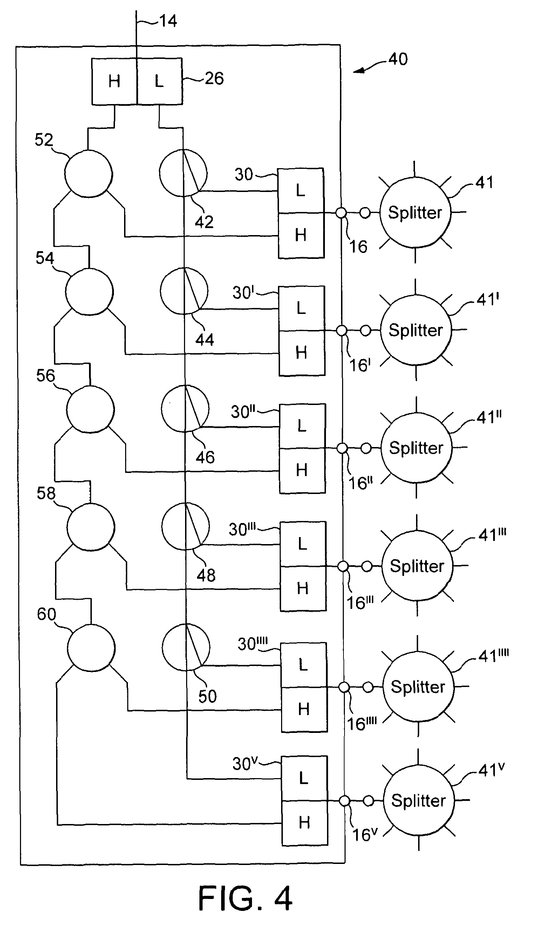

The present invention can also be used to create level optimisation and so improve the noise level of tap banks. This is particularly useful with the implementation of Docsis 3.0 (a telecommunications standard for data transfer) and channel banding where the level of the upstream signals are reduced. These reductions cause signal level issues from homes to the input of a tapbank. As explained previously, the upstream signal is not so affected by cable loss and as such, not by the cable length. Therefore this will create attenuation differences between the homes and the input of the tap bank. To overcome that problem, different steps (small) on the splitters are preferable. The embodiment of Figure 4 allows one to address both these issues, creating small level steps and reducing the total loss.

In the network device 40 of Figure 4, again the downstream and upstream signals are separated within the device by use of a diplex filter 26 connected to input 14 and output diplex filters 30, 30', 30", 30"', 30"", 30^{v} connected to six outputs 16, 16', 16", 16'", 16"", 16^{v}. The downstream path follows a cascade of splitters. One port of each splitter is connected to the next splitter while the other port goes to a main splitter 41 via the output diplex filter.

The upstream signal from the main splitters 41, 41', 41", 41'", 41"", 41^{v} is first split from the downstream signal by each output diplex filter. The upstream signal follows a cascade of taps until all upstream signals are combined in a common signal. In this embodiment the upstream paths between the low frequency side of diplex filters 26 and 30, 30', 30", 30"', 30"", 30^{v} are connected to taps 42, 44, 46, 48 and 50 such that each upstream signal in turn passes to a tap where it joins with another upstream signal from another output until at final tap 42 all upstream signals are carried together in a common signal ready to enter diplexer 26 and pass upstream from input 14 to the service provider. Thus each upstream signal in turn is fed into a preceding signal until all upstream signals are carried together.

Each tap has losses from in to out and so the tap levels are adjusted to ensure the attenuation for each upstream signal is the same. Thus by way of example, tap 42 can be set at 2dB, tap 44 at 4dB, tap 46 at 6dB, tap 48 at 8dB and tap 50 at 10dB. The tap values are chosen to have the wanted differences between the ports while the total insertion loss is as low as possible. The total insertion loss of the upstream signal is much lower than for conventional tap units, with the added noise optimized and the total loss much lower.

For the downstream path from the high pass side of filter 26 to output filters 30, 30', 30", 30"', 30"", 30^{v}, the downstream signal is split using a plurality of cascaded splitters 52, 54, 56, 58, 60 to create 4dB level steps. One output from each splitter is connected to the high pass side of an associated output filter and the second output is connected to the input of a successive splitter until the downstream signal is split into substantially equal components for each output. If one has six output ports as shown, and of course any number of output ports can be included, the attenuation levels in to out for downstream signals will be 15dB for port 16, 19dB for port 16', 23dB for port 16", 27dB for port 16"', 31dB for port 16"" and 31dB for port 16^{v}. The 4dB steps compensate for the different cable lengths to the home with long cables mounted on ports with high levels and short cable on ports with low levels, as discussed previously. Total insertion loss from the input of the network device to every home can thus be equalized and by way of example will be set to 26dB.

## Claims

1. A cable network device (24) comprising an input (14) connected to a plurality of outputs (16, 16', 16" and 16"'), the input (14) connected to each output (16, 16', 16" and 16"') by first and second electrical communication paths, where downstream signals from the input (14) to each output (16, 16', 16" and 16"') pass along the first electrical communication path and upstream signals from each output to the input (14) pass along the second electrical communication path, **characterised in that** the input (14) is connected to a plurality of tap elements (28, 28', 28", 28"'), each tap element in communication with an adjoining tap element and one output, and each second electrical communication path having the same attenuation as the other second electrical communication paths.

2. A cable network device according to claim 1, wherein the input (14) is connected to a first filter means (26) for separating electrical signals into high and low frequency bands.

3. A cable network device according to any of the preceding claims, wherein each output (16; 16'; 16"; and 16"') is connected to a second filter means (30; 30'; 30"; 30"') to separate out upstream signals.

4. A cable network device according to claim 3, wherein the input (14) is connected by way of a splitter means (32) to each second filter means (30, 30', 30", 30"').

5. A cable network device according to claim 3, wherein the input (14) is connected by way of a plurality of splitter means (52, 54, 56, 58, 60) to each second filter means, each splitter means communicating with an adjoining splitter means (41; 41'; 41"; 41"'; 41""; 41^{v}) and one output (16; 16'; 16"; 16"'; 16""; 16^{v}).

6. A cable network device according to any of the preceding claims, wherein the first and second electrical communication paths are separated.

7. A cable/data network incorporating one or more cable network devices in accordance with any of claims 1 to 6.

## Patentansprüche

1. Kabelnetzvorrichtung (24), die einen Eingang (14) umfasst, der mit einer Vielzahl von Ausgängen (16, 16', 16" und 16"') verbunden ist, wobei der Eingang (14) mit jedem Ausgang (16, 16', 16" und 16"') durch einen ersten und einen zweiten elektrischen Kommunikationspfad verbunden ist, wobei Stromabwärtssignale von dem Eingang (14) zu jedem Ausgang (16, 16', 16" und 16"') entlang dem ersten elektrischen Kommunikationspfad verlaufen und Stromaufwärtssignale von jedem Ausgang zu dem Eingang (14) entlang dem zweiten elektrischen Kommunikationspfad verlaufen, **dadurch gekennzeichnet, dass** der Eingang (14) mit einer Vielzahl von Abzweigelementen (28, 28', 28" und 28"') verbunden ist, wobei jedes Abzweigelement mit einem benachbarten Abzweigelement und einem Ausgang in Kommunikation steht, und jeder zweite elektrische Kommunikationspfad dieselbe Abschwächung aufweist wie die anderen zweiten elektrischen Kommunikationspfade.

2. Kabelnetzvorrichtung nach Anspruch 1, wobei der Eingang (14) mit einem ersten Filtermittel (26) zum Separieren elektrischer Signale in Hoch- und Niederfrequenzbänder verbunden ist.

3. Kabelnetzvorrichtung nach einem der vorhergehenden Ansprüche, wobei jeder Ausgang (16; 16'; 16" und 16"') mit einem zweiten Filtermittel (30, 30', 30" und 30"') verbunden ist, um Stromaufwärtssignale abzuseparieren.

4. Kabelnetzvorrichtung nach Anspruch 3, wobei der Eingang (14) mittels eines Splittermittels (32) mit jedem der zweiten Filtermittel (30, 30', 30" und 30"') verbunden ist.

5. Kabelnetzvorrichtung nach Anspruch 3, wobei der Eingang (14) mittels einer Vielzahl von Splittermitteln (52, 54, 56, 58, 60) mit jedem zweiten Filtermittel verbunden ist, wobei jedes Splittermittel jeweils mit einem benachbarten Splittermittel (41; 41'; 41"; 41"'; 41""; 41^{v}) und einem Ausgang (16; 16'; 16"; 16"'; 16""; 16^{v}) kommuniziert.

6. Kabelnetzvorrichtung nach einem der vorhergehenden Ansprüche, wobei der erste und der zweite elektrische Kommunikationspfad separiert sind.

7. Kabel-/Datennetz, das eine oder mehrere Kabelnetzvorrichtungen nach einem der Ansprüche 1 bis 6 einschließt.

## Revendications

1. Dispositif de réseau câblé (24) comprenant une entrée (14) reliée à une pluralité de sorties (16, 16', 16" et 16"'), l'entrée (14) étant reliée à chaque sortie (16, 16', 16" et 16''') par des premiers et seconds chemins de communication électrique, où des signaux aval allant de l'entrée (14) à chaque sortie (16, 16', 16" et 16"') passent le long du premier chemin de communication électrique et des signaux amont allant de chaque sortie à l'entrée (14) passent le long du second chemin de communication électrique, **caractérisé en ce que** l'entrée (14) est reliée à une pluralité d'éléments de prise (28, 28', 28", 28"'), chaque élément de prise étant en communication avec un élément de prise adjacent et une sortie, et chaque second chemin de communication électrique ayant la même atténuation que les autres seconds chemins de communication électrique.

2. Dispositif de réseau câblé selon la revendication 1, dans lequel l'entrée (14) est reliée à un premier moyen de filtrage (26) pour séparer les signaux électriques en bandes de fréquences hautes et basses.

3. Dispositif de réseau câblé selon l'une quelconque des revendications précédentes, dans lequel chaque sortie (16; 16'; 16''; et 16''') est reliée à un second moyen de filtrage (30 ; 30' ; 30" ; 30"') pour séparer les signaux amont.

4. Dispositif de réseau câblé selon la revendication 3, dans lequel l'entrée (14) est reliée par l'intermédiaire d'un moyen séparateur (32) à chaque second moyen de filtrage (30, 30', 30", 30"').

5. Dispositif de réseau câblé selon la revendication 3, dans lequel l'entrée (14) est reliée par l'intermédiaire d'une pluralité de moyens séparateurs (52, 54, 56, 58, 60) à chaque second moyen de filtrage, chaque moyen séparateur communiquant avec un moyen séparateur adjacent (41 ; 41' ; 41" ; 41"' ; 41"" ; 41^{V}) et une sortie (16; 16'; 16''; 16''' ; 16"" ; 16^{v}).

6. Dispositif de réseau câblé selon l'une quelconque des revendications précédentes, dans lequel les premiers et seconds chemins de communication électrique sont séparés.

7. Réseau câblé/de données incorporant un ou plusieurs dispositifs de réseau câblé selon l'une quelconque des revendications 1 à 6.
